# EUROPÄISCHE PATENTSCHRIFT

(11) **EP 0 765 019 B1**
(45) Veröffentlichungstag und Bekanntmachung des Hinweises auf die Patenterteilung: **17.04.2002**
(21) Anmeldenummer: 96115165.1
(22) Anmeldetag: 20.09.1996
(51) Int. Cl.: H02G 9/00, B64F 1/20, H02G 15/06, H02G 9/10, F21S 8/02, H01R 13/52

(54) **Installationseinrichtung für Befeuerungseinheiten eines Flugfeldes**
Installation device for power outlet units in airports
Dispositif d'installation d'une système d'alimentation d'énergie d'un aéroport

(30) Priorität: 21.09.1995 DE 29515162 U
(43) Veröffentlichungstag der Anmeldung: 26.03.1997
(73) Patentinhaber: SIEMENS AKTIENGESELLSCHAFT, 80333 München (DE)
(72) Erfinder: Willems, Louis, 3400 Landen (BE)

(56) Entgegenhaltungen:
- DE-A- 1 422 520
- FR-A- 2 369 159
- GB-A- 2 068 523
- US-A- 4 382 274
- US-A- 4 499 527
- US-A- 5 129 843

## Beschreibung

Die Erfindung betrifft in Serie geschaltete Unterflurfeuer eines Flugfeldes, die Bodeneinsätze aufweisen und zwischen denen Energieversorgungskabel angeordnet sind..

Es ist bekannt, so z.B. aus US-A-4 382 274 in Name der Firma ADB in Brüssel, die Bodeneinsätze von Befeuerungseinheiten eines Flugfeldes mit seitlichen Öffnungen zu versehen, in die die notwendigen Energieversorgungskabel eingeführt werden. Die Öffnungen sind gegenüber der Umgebung verschlossen. Innerhalb der Bodeneinsätze befinden sich an den Kabelenden spezielle Verbindungsstecker (FAA-Stecker) für Anschlüsse der Lampeneinsätze.

Es ist Aufgabe der Erfindung, diese bekannten Ausführungen durch eine Installationseinrichtung zu ersetzen, die insgesamt kostengünstiger ist. Die Aufgabe wird dadurch gelöst, daß die Energieversorgungskabel von außen kommend in einem Stecker enden, der in eine in der Wand je Bodeneinsatz angeordneten Steckdose eingesteckt ist, wobei diese im Bodeneinsatzinneren mit einem Innenstecker verbunden ist und wobei die Steckdose in der Wand des Bodeneinsatzes abgedichtet eingesetzt ist.

Durch die erfindungsgemäßen Steckdosen, die die Kabeleinführungsöffnungen ausfüllen, kann vorteilhaft auf eine gesonderte Abdichtung der Kabeleinführungsöffnungen gegenüber der Umgebung verzichtet werden. Darüber hinaus ergibt sich eine einfachere Montierbarkeit. Besonders vorteilhaft ist es, daß je Bodeneinsatz nur eine Steckdose notwendig ist, die Zahl der Kabelverbindungen also reduziert wird. Die Steckdose ist also vorteilhaft so ausgestaltet, daß sie sowohl eine Kabelein- als auch eine Kabelausführung aufweist.

In Ausgestaltung der Erfindung ist vorgesehen, daß die Steckdose in der Wand des Bodeneinsatzes gegen Feuchtigkeit abgedichtet angeordnet ist, wobei sich ein Einsetzen der Steckdose in eine Vertiefung in der Wand des Bodeneinsatzes und ein Vergießen oder Verschrauben mit Dichtungen als besonders vorteilhaft herausgestellt hat. Das Einsetzen der Steckdose in die Wand des Bodeneinsatzes erfolgt vorzugsweise im Bereich einer Wandvertiefung, die durch eine Einpressen in einen Bodeneinsatz aus Blech oder durch Einformen in einen gegossenen Bodeneinsatz, erzeugt ist.

In weiterer Ausgestaltung der Erfindung ist vorgesehen, daß die Steckdose für jede Ader des Energieversorgungskabels eine Polstifthülse aufweist, die in das Steckdosengehäuse einpreßbar ausgebildet ist. So ergibt sich eine besonders günstig zu fertigende Ausführung der Steckdose.

Erfindungsgemäß ist weiterhin vorgesehen, daß die Polstifthülsen als Verpolungsschutz unterschiedliche Innendurchmesser aufweisen. So kann sehr vorteilhaft für über die Energieversorgungskabel übertragene Signale ein einwandfreier Signalweg sichergestellt werden.

In die Steckdose wird vorteilhaft ein Kabelstecker für den Energieversorgungsanschluß des Feuers o.ä. eingesteckt. So ergibt sich eine einfache Trennmöglichkeit des äußeren Energieversorgungskabels von dem Energieversorgungsanschluß des Feuers o.ä.

Die Steckdose ist vorteilhaft außen abgedichtet ausgeführt. Hierfür weist sie ein Abdichtungselement, vorzugsweise.in Form einer Vergußmasse auf, die die Steckdose gegenüber der Umgebung abdichtet. So kann zuverlässig ein Feuchtigkeitseintritt in das Innere der Bodeneinsätze verhindert werden.

Die Erfindung wird anhand von Zeichnungen, aus denen weitere, ebenso wie aus den Unteransprüchen auch erfindungswesentliche, Einzelheiten entnehmbar sind, näher erläutert. Im einzelnen zeigen:
- FIG 1: einen Querschnitt durch ein Unterflurfeuer,
- FIG 2: eine Steckdose mit eingepreßten Polstifthülsen,
- FIG 3: eine Aufsicht auf eine Steckdose und
- FIG 4: einen vergrößerten Längsschnitt durch eine Polstifthülse.

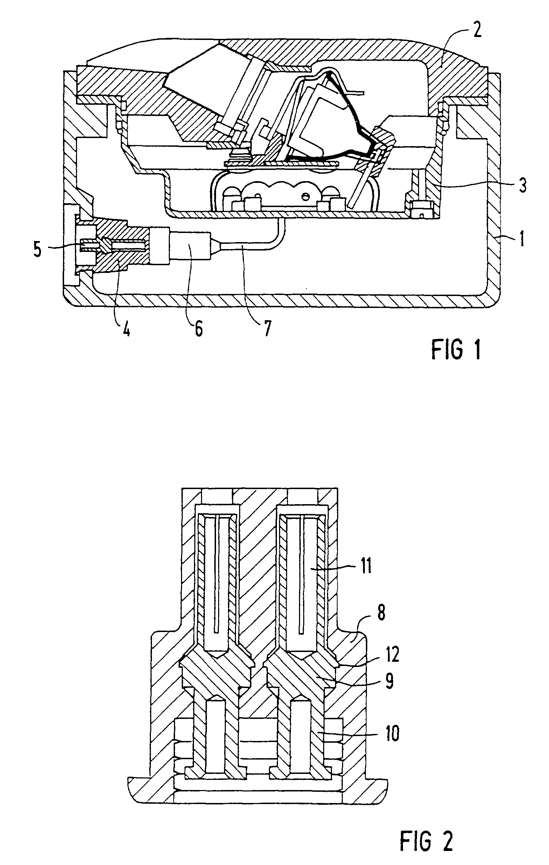

In FIG 1 bezeichnet 1 den Bodeneinsatz und 2 den Deckel des Unterflurfeuers. 3 bezeichnet das Unterteil des Unterflurfeuers, in das der Energieversorgungsanschluß 7 für das nicht näher bezeichnete, in üblicher Weise ausgeführte optische System des Unterflurfeuers einmündet. Die erfindungsgemäße Steckdose ist mit 4 bezeichnet. In dieser sind Polstifthülsen 5, 11, 15 angeordnet, in die die Pole des Steckers 6 der Energieversorgungsanschluß 7 eingesteckt sind. Der Bodeneinsatz 1 ist in FIG 1 beispielhaft als Gußausführung dargestellt, er kann jedoch ebenso aus Blech bestehen. Zum Schutz gegen mechanische Beschädigungen der Energiekabeleinführung in die Steckdose 4 und zur Verbesserung der Abdichtung ist diese zurückgesetzt angeordnet.

Aus FIG 2 ist die Anordnung der Polstifthülsen 11 in dem Gehäuse 8 der Steckdose (4) ersichtlich. Um die Polstifthülsen 11 fest mit dem Gehäuse 8 der Steckdose zu verbinden, besitzt jede Polstifthülse einen massiven Flansch 9 mit einem wulstartigen Vorsprung 12, der in entsprechende Ausnehmungen des Gehäuses 8 der Steckdose eingreift. Zur Aufnahme der von außen kommenden Energiekabelenden weist jede Polstifthülse einen festen Aufnahmezylinder 10 auf.

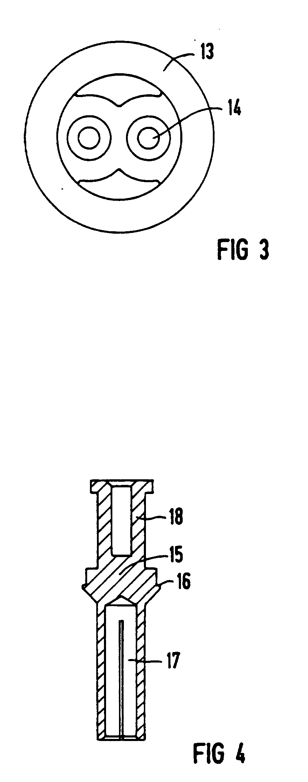

In FIG 3 bezeichnet 13 einen äußeren Kragen der Steckdose und 14 die eingesetzten Polstifthülsen. Unter dem Kragen 13 können in nicht gezeigter Weise Arretierungsvorsprünge, eventuell mit gewindeähnlichen Zähnen o.ä. an geordnet sein. Dies verbessert den Sitz der Steckdosen in den Wänden der Bodeneinsätze. Besonders vorteilhaft ist jedoch für die Verbindung der Steckdose mit den Bodeneinsätzen ein Vergießen der Steckdose mit einem gegen chemische Angriffe resistenten Kunststoff. Dieses Vergießen erfolgt insbesondere von außen; kann aber jedoch ebenso von innen erfolgen.

Aus FIG 4 ist deutlich der für eine sichere Befestigung der Polstifthülsen in den Steckdosen sorgende dreieckige oder runde Wulst 16 ersichtlich, der um das flanschartige Mittelteil der Polstifthülse 15 umlaufend ausgebildet ist. Der Hülsenteil 17 der Polstifthülsen weist vorteilhaft einen Schlitz auf, der durchgehend oder unterbrochen ausgeführt sein kann, um eine elastische Klemmverbindung zu den Polen des von innen eingesteckten Steckers zu bilden. Dem Hülsenteil 17 gegenüber befindet sich der zylindrische Teil 18 der Polstifthülse 15, in dem das Ende des Energieversorgungskabel des Unterflurfeuers oder einer anderen Befeuerungseinheit befestigt wird. Dabei dient ein Pol der Zuführung der Energie zu dem, in FIG 1 beispielhaft gezeigten seriell arbeitenden Unterflurfeuers, während der andere Pol der Weiterleitung der Energie zum nächsten Unterflurfeuer o.ä. dient.

Die Steckdose ist zwar für serielle Unterflurfeuer entwickelt worden, sie kann jedoch für parallelgeschaltete Befeuerungseinheiten aller Art gleichermaßen verwendet werden. Auch dabei stellen sich die geschilderten Vorteile ein.

## Patentansprüche

1. In Serie geschaltete Unterflurfeuer eines Flugfeldes, die Bodeneinsätze (1) aufweisen und zwischen denen Energieversorgungskabel angeordnet sind,
**dadurch gekennzeichnet, daß** die Energieversorgungskabel von außen kommend in einem Stecker enden, der in eine in der Wand je Bodeneinsatz angeordnete Steckdose (4) eingesteckt ist, wobei diese im Bodeneinsatzinneren mit einem Innenstecker (6) verbunden ist und wobei die Steckdose (4) in der Wand des Bodeneinsatzes (1) abgedichtet eingesetzt ist.

2. Unterflurfeuer nach Anspruch 1,
**dadurch gekennzeichnet, daß** die Steckdose (4) in der Wand des Bodeneinsatzes (1) vergossen oder verschraubt angeordnet ist.

3. Unterflurfeuer nach Anspruch 1 oder 2,
**dadurch gekennzeichnet, daß** die Steckerdose (4) für jeden Pol des Energieversorgungskabels eine Polstifthülse (5, 11, 15) aufweist, die in das Gehäuse (8) der Steckerdose (4) einpreßbar ausgebildet ist.

4. Unterflurfeuer nach einem der vorhergehenden Ansprüche,
**dadurch gekennzeichnet, daß** die Polstifthülsen (5, 11, 15) als Verpolungsschutz unterschiedliche Innendurchmesser aufweisen.

5. Unterflurfeuer nach einem der vorhergehenden Ansprüche,
**dadurch gekennzeichnet, daß** die Steckdose (4) außen ein Abdichtungselement, z.B. in Form einer vergußmasse, aufweist, das sie gegenüber der Umgebung abdichtet.

## Claims

1. Airfield flush-marker lights connected in series, comprising floor inserts (1) and between which power supply cables are arranged, **characterised in that** the power supply cables arriving from outside end in a plug which is inserted into a socket (4) arranged in the wall of the floor insert, this socket being connected inside the floor insert to an internal plug (6) and the socket (4) being inserted in the wall of the floor insert (1) so as to be sealed.

2. Flush-marker light according to claim 1, **characterised in that** the socket (4) is cast or screwed in the wall of the floor insert (1).

3. Flush-marker light according to claim 1 or 2, **characterised in that** the socket (4) has a pin terminal sleeve (5, 11, 15) for each pole of the power supply cable, which is designed so it can be pressed into the housing (8) of the socket (4).

4. Flush-marker light according to any of the preceding claims, **characterised in that** the pin terminal sleeves (5, 11, 15) have various internal diameters as polarity reversal protection.

5. Flush-marker light according to any of the preceding claims, **characterised in that** on the outside the socket (4) has a sealing element, for example in the form of a sealing compound, which seals it from the environment.

## Revendications

1. Feux encastrés montés en série sur un terrain d'aviation, qui comportent des inserts dans le sol (1) et entre lesquels sont disposés des câbles d'alimentation électrique,
**caractérisés en ce que** les câbles d'alimentation électrique provenant de l'extérieur débouchent dans un connecteur qui est enfiché dans une prise femelle (4) montée dans la paroi de chaque insert dans le sol, cette prise femelle étant reliée, à l'intérieur de l'insert dans le sol, à un connecteur intérieur (6) et la prise femelle (4) étant insérée de manière étanche dans la paroi de l'insert dans le sol (1).

2. Feux encastrés selon la revendication 1,
**caractérisés en ce que** la prise femelle (4) est scellée ou vissée dans la paroi de l'insert dans le sol (1).

3. Feux encastrés selon la revendication 1 ou 2,
**caractérisés en ce que** la prise femelle (4) comporte, pour chaque pôle du câble d'alimentation électrique, un fourreau polaire à broches (5, 11, 15) qui peut être enfoncé dans le corps (8) de la prise femelle (4).

4. Feux encastrés selon l'une des revendications précédentes,
**caractérisés en ce que** les fourreaux polaires à broches (5, 11, 15), comme irréversibilité des pôles, présentent des diamètres intérieurs différents.

5. Feux encastrés selon l'une des revendications précédentes,
**caractérisés en ce que** la prise femelle (4) comporte extérieurement un élément d'étanchéité, par exemple sous la forme d'une masse de remplissage, qui assure l'étanchéité de la prise femelle par rapport à ce qui l'entoure.
